# EUROPEAN PATENT SPECIFICATION

(11) **EP 0 872 840 B1**
(45) Date of publication and mention of the grant of the patent: **10.11.2004**
(21) Application number: 98301378.0
(22) Date of filing: 25.02.1998
(51) Int. Cl.: G11B 20/14

(54) **Demodulation circuit and demodulation table for a digital video disk reproducing apparatus**
Demodulationsvorrichtung und -tabelle für digitales Videoplattenwiedergabegerät
Circuit de démodulation et table de démodulation pour un appareil de reproduction de disque vidéo numérique

(30) Priority: 18.04.1997 KR 9714510
(43) Date of publication of application: 21.10.1998
(73) Proprietor: Samsung Electronics Co., Ltd., Suwon-city, Kyungki-do 441-370 (KR)
(72) Inventor: Yim, Jong-Sang, Suwon-city, Kyungki-do (KR)
(74) Representative: Robinson, Ian Michael

(56) References cited:
- K.A. SCHOUHAMER IMMINK: "EFMPlus: THE CODING FORMAT OF THE MULTIMEDIA COMPACT DISC" IEEE TRANSACTIONS ON CONSUMER ELECTRONICS, vol. 41, no. 3, August 1995, pages 491-497, XP000539497 New York

## Description

The present invention relates to a digital video disk reproducing apparatus, and more particularly, to a demodulation table and a demodulation circuit for use therewith.

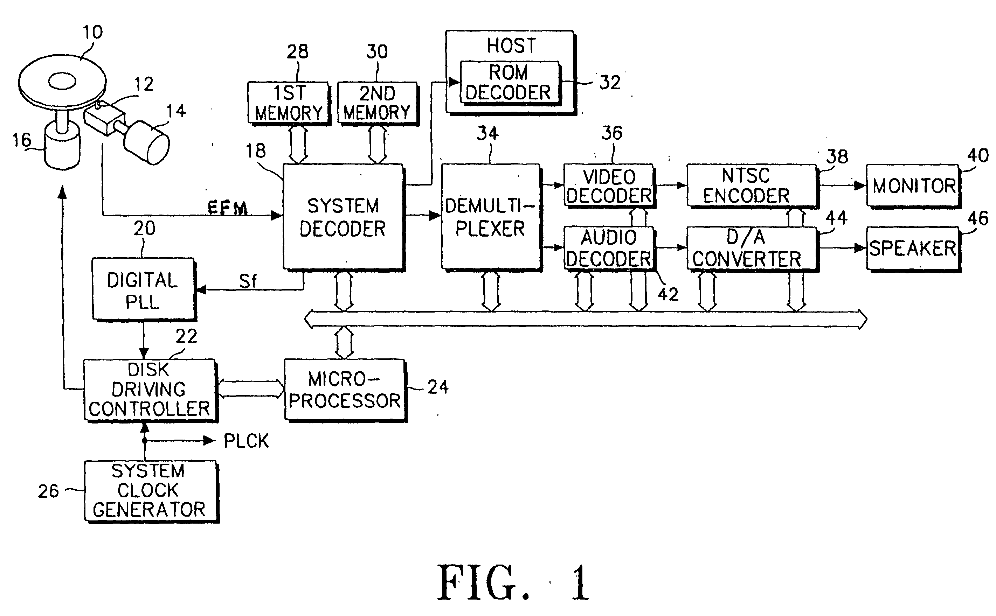

Firstly, by way of background explanation, a general prior art DVD (Digital Video Disk) reproducing apparatus will be described with reference to the schematic illustration of Figure 1. A disk 10 is rotated by a disk motor 16, and an optical pickup including a head 12 converts information reproduced from the disk 10 into an analog RF (Radio Frequency) signal. This analog RF signal is shaped into a pulse waveform and a data stream EFM (Eight-to-Fourteen Modulation) is transmitted to a digital PLL (Phase Locked Loop) 20 and a system decoder 18. The system decoder 18 demodulates, error-corrects, and descrambles the data stream EFM. The digital PLL 20 comprising a phase comparator, a voltage controlled oscillator, and a demultiplier, generates a first clock in synchronization with a signal reproduced from the optical disk 10. A disk driving controller 22 controls a constant linear velocity of the disk and other disk related operations by means including, for example, a frequency servo and a phase servo, according to a frame synchronizing signal Sf provided from a synchronous detector (not shown).

A microprocessor 24 controls the overall operation of the DVD reproducing apparatus according to a control program. For instance, if a data transmission start signal is received from an audio decoder 42, a video decoder 36 or a ROM (Read Only Memory) decoder 32, the microprocessor 24 generates a transmission control signal. A system clock generator 26, which is a crystal oscillator, transmits a second clock being a system clock PLCK to the disk driving controller 22 and an error correction circuit (not shown). A first memory 28 connected to the system decoder 18 is a memory for error correction and uses a SRAM (Static Random Access Memory). A second memory 30 is a memory for buffering a track and uses a DRAM (Dynamic Random Access Memory). The ROM decoder 32 contained in a host (for example, a personal computer) operates according to a command of the host and transmits data generated from the system decoder 18 to the host according to an interface system. A demultiplexer 34 is a data phaser and transmits an audio signal and a video signal to the AC3/MPEG audio decoder 42 and the MPEG2 video decoder 36, respectively. Video data and audio data respectively demodulated from the video decoder 36 and the audio decoder 42 are transmitted to an NTSC (or PAL) encoder 38 and a digital-to-analog (D/A) converter 44 and generated through a monitor 40 and a speaker 46, respectively.

K.A. Schouhamer Immink: "EFMPlus: the coding format of the multimedia compact disc" IEEE transactions on consumer electronics", Vol.41, No 3, August 1995 discloses EFMPlus coding using a main conversion table and a sub conversion table.

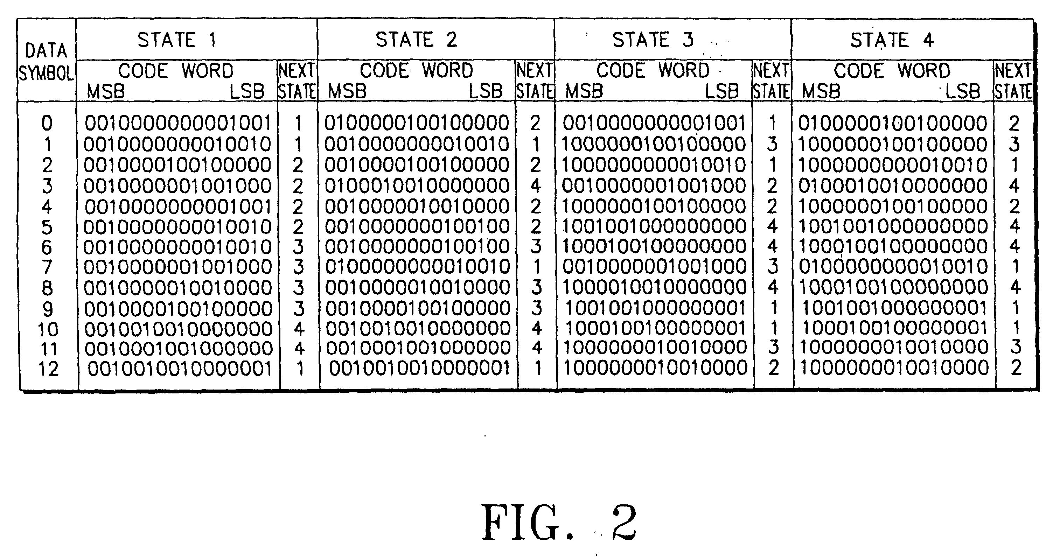

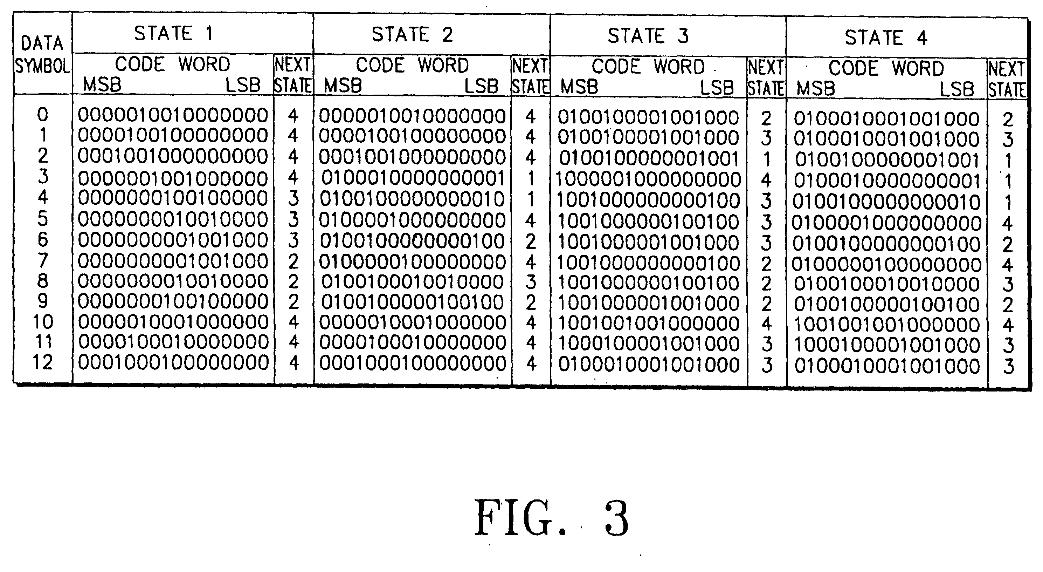

The configurations of a main conversion table and a sub conversion table of an EFM plus method used in the DVD reproducing apparatus having the above-described construction are shown in FIGS. 2 and 3.

Generally, a DVD stores a modulated signal in modulation/demodulation tables comprising a main conversion table and a sub conversion table, each having 4 states. TheDVD reproducing apparatus demodulates the modulated signal to obtain an 8-bit digital signal. This method is the EFM plus or an 8-to-16 modulation/demodulation process.

A modulation process of the DVD maps a code word corresponding to any 8-bit digital data produced from the main conversion table or the sub conversion table. That is, the first code word corresponding to the first 8-bit digital data is searched from a first state (state 1) of the main conversion table and the first code word is mapped after a synchronizing signal which is a start signal of a frame. Thereafter, the second code word corresponding to the second 8-bit digital data is searched from the next state designated by the first code word and the second code word is mapped. For example, if the first 8-bit digital data is "00000000" (that is, if a data symbol is 0), the data symbol of 0 is modulated to the - code word "0010000000001001" of the first state of the main conversion table shown in FIG. 2. The next state designated by the code word "0010000000001001" is the first state. If the next 8-bit digital data is "00000010" (that is, if the data symbol is 2), the data symbol of 2 is modulated to the code word "0010000100100000" of the first state of the main conversion table. The next state designated by the code word "0010000100100000" is a second state (state 2). Therefore, the next digital input data is modulated in the second state. Meanwhile, in order to improve readability from the disk 10, a difference in number between 0s and 1s, that is, a digital sum value (DSV) should approximate to "0". To achieve this aim, the next state may vary.

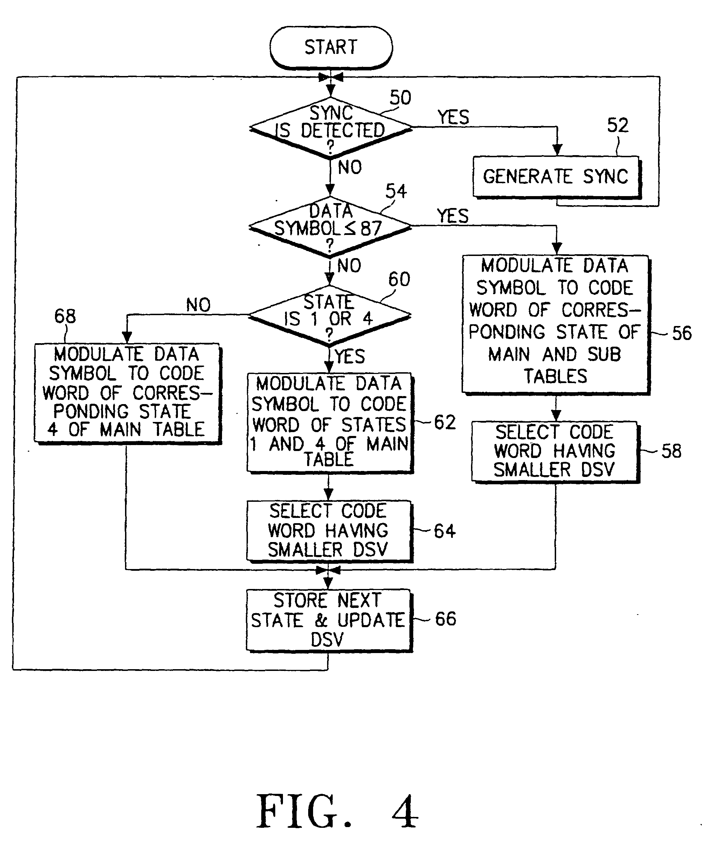

Referring to Figure 4, there is shown a general modulation process of the EFM plus. At step 50, whether a synchronizing signal SYNC is detected from an 8-bit digital data input stream is checked. If the synchronizing signal SYNC is detected, an EFM plus modulator generates the synchronizing signal SYNC at step 52 and modulates input digital data to a corresponding code word of the main or sub conversion table. If the synchronizing signal is not detected, whether the data symbol of the input digital data is 87 or less is checked at step 54. If the data symbol is 88 or more, the data symbol is modulated to a corresponding code word of the main conversion table. If the data symbol is 87 or less, the data symbol is modulated to a corresponding code word of the main or sub conversion table as determined by the DSV. This is because the main conversion table has the data symbols from 0 to 255 and the sub conversion table has the data symbols from 0 to 87, although for simplicity, the main and sub conversion tables of Figures 2 and 3 show only the data symbols from 0 to 12. Therefore, if the data symbol of the input data stream is 88 or more, the EFM plus modulator checks whether the state designated by the corresponding data symbol is a first or fourth state at step 60. If so, the data symbol is modulated to the code word of the first and fourth states (state 1 and state 4) of the main conversion table at step 62. At step 64, the code word of the state having the smaller DSV is selected. At step 66, the next state is stored and the DSV is updated. Step 66 is followed by step 50. On the other hand, if the state designated by the corresponding data symbol is a second or third state (state 2 or state 3), the EFM plus modulator modulates the data symbol to the code word of a corresponding state of the main conversion table at step 68. Step 68 proceeds to step 66. If the data symbol is 87 or less at step 54, the EFM plus modulator modulates the data symbol to the code word of a corresponding state of the main and sub conversion tables at step 56. At step 58, the code word of the corresponding state of the main or sub conversion table having the smaller DSV is selected. Step 58 proceeds to step 66.

To demodulate the code word modulated by the above process, the modulated code word is selectively demodulated from the main table consisting of 4 states according to the next state. To reduce the DSV, that is, the difference in number between 0s and 1s, there is additionally needed a circuit for selectively controlling the main and sub conversion tables or a table having the next state of the first or fourth state. That is, since the conventional EFM plus modulation/demodulation conversion table includes the main and sub conversion tables each consisting of 4 states and the demodulation is performed in reverse order according to a modulation order or algorithm, it is difficult to optimize each table. Moreover, complicated DSV operation circuits and comparators are required.

It is an aim of at least preferred embodiments of the present invention to provide a demodulation table and a demodulation circuit that overcomes at least some of the problems inherent with the prior art arrangement described above.

In accordance with one aspect of the present invention, there is provided a demodulation table for use in a digital video disk reproducing apparatus, said demodulation table for mapping and demodulating an EFM (Eight-to-Fourteen Modulation) plus modulation signal having first, second, third and fourth states respectively, characterised by said demodulation table comprising: a first conversion table having data symbols designating either a next state of said second state or a next state of said third state; and a second conversion table having data symbols designating next states which are not included in said first conversion table.

The present invention also relates to a demodulation table as set forth in Claim 1, a method for generating a demodulation table as set fourth in Claim 7, and a demodulation method as set fourth in Claim 8, of the claims appended hereto.

For a better understanding of the invention, and to show how embodiments of the same may be carried into effect, reference will now be made, by way of example, to the accompanying diagrammatic drawings, in which:
Figure 1 is a block diagram of a general digital video (or versatile) disk reproducing apparatus;
Figure 2 shows the configuration of a main conversion table of an EFM plus used in the digital video disk reproducing apparatus;
Figure 3 shows the configuration of a sub conversion table of an EFM plus used in the digital video disk reproducing apparatus;
Figure 4 is a flow chart showing a general modulation process of an EFM plus; and
Figure 5 is a block diagram of a demodulation circuit according to a preferred embodiment of the present invention.

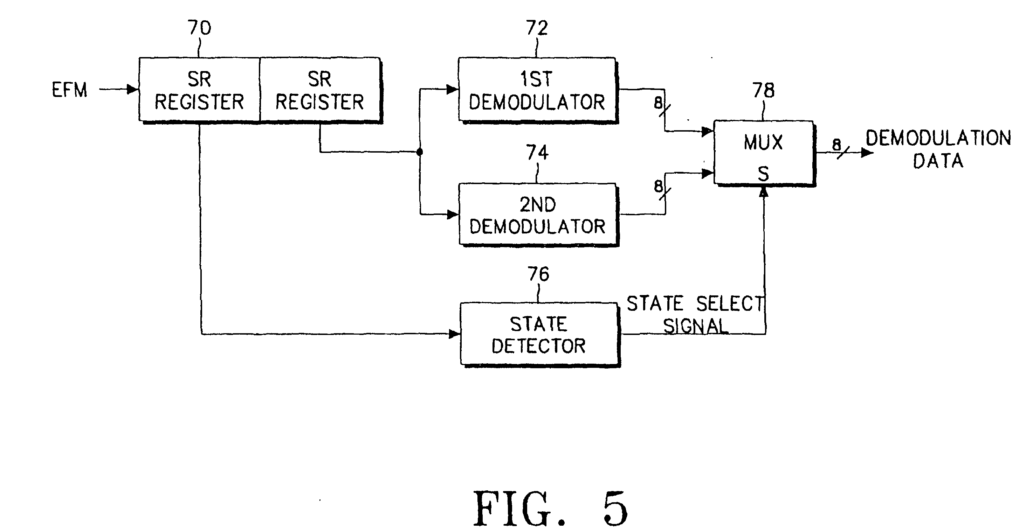

In a preferred embodiment of the present invention, the data symbols designating the next states of the second and third states in the main and sub conversion tables shown in Figures 2 and 3 are separated from each other, thereby constructing two new tables. The data symbols designating the next states of the first and fourth states are included in one of the two new tables. For example, the data symbols designating the next states of the first, third and fourth states may constitute one table, and the data symbols designating the next state of the second state may constitute the other table. Then there is no need to divide the EFM plus modulation/demodulation table into the main and sub conversion tables. The signal modulated by the DSV control of the first and fourth states can be easily demodulated by the next state irrespective of a corresponding state. In FIG. 5, a demodulator including the table re-constructed by the data symbols having the next state of the second state is called a first demodulator 72, and a demodulator including the table re-constructed by the data symbols having the next states of the first, third and fourth states is called a second demodulator 74.

Referring to Figure 5, a demodulation circuit includes a 32-bit shift right (SR) register 70 for storing an input bit stream, the first and second demodulators 72 and 74 for converting the code word of 16 more significant bits supplied to the SR register 70 into 8-bit demodulation data according to the designated next state, and a multiplexer (MUX) 78 for selectively generating one of output signals of the first and second demodulators 72 and 74 according to a state select signal of a state detector 76. The state detector 76 detects the next state from the code word of 16 less significant bits supplied to the SR register 70 and generates the state select signal corresponding to the next state.

In operation, the EFM plus bit stream reproduced from the DVD 10 is stored in the SR register 70. The code word of 16 more significant bits is demodulated in the first demodulator 72 including the table of the next state of the second state and simultaneously demodulated in the second demodulator 74 including the table of the next states of the first, third and fourth states. The state detector 76 detects the next state from the code word of 16 less significant bits and transmits the state select signal to the MUX 78. By repeating the above-described operation, the EFM plus bit stream reproduced from the disk 10 is demodulated to the 8-bit digital data. Even if a new modulation process for controlling the DSV is added, the above demodulation circuit can be used unless the configuration of the modulation/demodulation table is not changed.

As noted previously, the signal modulated by various demodulation processes is demodulated by the demodulation circuit of a simple construction utilizing the demodulation table. Therefore, there is no need to provide additional circuits such as DSV operation circuits and comparators.

## Claims

1. A demodulation table for use in a digital video disk reproducing apparatus, said demodulation table for mapping and demodulating an EFM (Eight-to-Fourteen Modulation) plus modulation signal having first, second, third and fourth states respectively, **characterised by** said demodulation table comprising:
a first conversion table having data symbols designating either a next state of said second state or a next state of said third state; and
a second conversion table having data symbols designating next states which are not included in said first conversion table.

2. A demodulation table as in claim 1, wherein:
the first conversion table has data symbols designating only one of either (a) the next state of the second state or (b) the next state of the third state; and
the second conversion table has data symbols designating the next state of the first state and the next state of the fourth state, and a respective other one of (a) the next state of the third state or (b) the next state of the second state.

3. A demodulation table as in claim 1, wherein:
the first conversion table has data symbols designating a next state of the second state; and
the second conversion table has data symbols designating a next state of first, third and fourth states.

4. A demodulation table as in claim 1, wherein:
the first conversion table has data symbols designation a next state of the third state; and
the second conversion table has data symbols designating a next state of first, second and fourth states.

5. A demodulation circuit for a digital video disk reproducing apparatus for re-constructing data symbols from an EFM (Eight-to-Fourteen Modulation) plus bit stream reproduced from a disk, **characterised by** said demodulation circuit comprising:
a shift register (70) for storing the EFM plus modulated bit stream;
first (72) and second (74) demodulators for converting a code word of more significant bits of a data symbol supplied to said shift register into 8-bit demodulation data according to a designated next state, where data symbols designating a next state of a second state and data symbols designating a next state of a third state are determined by different tables in the first and second demodulator, respectively;
a state detector (76) for detecting a next state from the code word of less significant bits of a data symbol supplied to said shift register and generating a state select signal; and
a multiplexer (78) for output signals from one of said first and second demodulators according to said state select signal.

6. The demodulation circuit as claimed in claim 5, wherein said code word of more significant bits of a data symbol is demodulated from said first demodulator (72) including a table having data symbols designating the next state of a second state and simultaneously demodulated from said second demodulator (74) including a table having data symbols designating the next states of first, third and fourth states.

7. A method for generating a demodulation table for use in a digital video disk reproducing apparatus, said demodulation table for mapping and demodulating an EFM (Eight-to-Fourteen) plus modulation signal, having first, second, third and fourth states respectively, said method comprising the steps of:
generating a first conversion table having data symbols designating either a next state of said second state or a next state of said third state; and
generating a second conversion table having data symbols designating next states which are not included in said first conversion table.

8. A demodulation method for use in a digital video disk reproducing apparatus, said method for re-constructing data symbols from an EFM (Eight-to-Fourteen) plus modulated bit stream reproduced from a disk, **characterised by** said demodulation method comprising:
storing said EFM plus bit stream in a shift register (70);
converting a code word of more significant bits of a data symbol supplied to said shift register into 8-bit demodulation data according to a designated next state where data symbols designating a next state of a second state and data symbols designating a next state of a third state are determined by different tables in a first demodulator (72) and in a second demodulator (74) respectively;
detecting (76) a next state from the code word of less significant bits of a data symbol supplied to said shift register and generating a state select signal; and
selecting (78) output signals from one of said first and second demodulators according to said state select signal.

9. The method as claimed in claim 8, wherein said code word of more significant bits of a data symbol is demodulated from said first demodulator (72) including a table having data symbol designating the next state of a second state and simultaneously demodulated from said second demodulator (74) including a table having data symbol designating the next state of first, third and fourth states.

## Patentansprüche

1. Demodulations-Tabelle zum Einsatz in einer digitalen Videoplatten-Wiedergabevorrichtung, wobei die Demodulations-Tabelle zum Abbilden und Demodulieren eines EFM (Eight-to-Fourteen-Modulation)-Plus-Modulationssignals einen ersten, zweiten, dritten bzw. vierten Zustand hat, **dadurch gekennzeichnet, dass** die Demodulations-Tabelle umfasst:
eine erste Umwandlungs-Tabelle mit Datensymbolen, die entweder einen nächsten Zustand des zweiten Zustandes oder einen nächsten Zustand des dritten Zustandes angegeben; und
eine zweite Umwandlungs-Tabelle, mit Datensymbolen, die nächste Zustände angeben, die nicht in der ersten Umwandlungs-Tabelle enthalten sind.

2. Demodulations-Tabelle nach Anspruch 1, wobei:
die erste Umwandlungs-Tabelle Datensymbole hat, die nur entweder (a) den nächsten Zustand des zweiten Zustandes oder (b) den nächsten Zustand des dritten Zustandes angeben; und
die zweite Umwandlungs-Tabelle Datensymbole hat, die den nächsten Zustand des ersten Zustandes und den nächsten Zustand des vierten Zustandes und einen entsprechenden anderen von (a) dem nächsten Zustand des dritten Zustandes oder (b) dem nächsten Zustand des zweiten Zustandes angeben.

3. Demodulations-Tabelle nach Anspruch 1, wobei:
die erste Umwandlungs-Tabelle Datensymbole hat, die einen nächsten Zustand des zweiten Zustandes angeben; und
die zweite Umwandlungs-Tabelle Datensymbole hat, die einen nächsten Zustand des ersten, des dritten und des vierten Zustandes angeben.

4. Demodulations-Tabelle nach Anspruch 1, wobei:
die erste Umwandlungs-Tabelle Datensymbole hat, die einen nächsten Zustand des dritten Zustandes angeben; und
die zweite Umwandlungs-Tabelle Datensymbole hat, die einen nächsten Zustand des ersten, des zweiten und des vierten Zustandes angeben.

5. Demodulations-Schaltung für eine digitale Videoplatten-Wiedergabevorrichtung zum Rekonstruieren von Datensymbolen aus einem EFM-Plus-Bitstrom, der von einer Platte wiedergegeben wird, **dadurch gekennzeichnet, dass** die Demodulations-Schaltung umfasst:
ein Schieberegister (70) zum Speichern des mit EFM-Plus-Modulation modulierten Bitstroms;
einen ersten (72) und einen zweiten (74) Demodulator, die ein Codewort höherwertiger Bits eines Datensymbols, das dem Schieberegister zugeführt wird, in 8-Bit-Demodulationsdaten entsprechend einem angegebenen nächsten Zustand umwandeln, wobei Datensymbole, die einen nächsten Zustand eines zweiten Zustandes angeben, und Datensymbole, die einen nächsten Zustand eines dritten Zustandes angeben, durch verschiedene Tabellen in dem ersten bzw. dem zweiten Demodulator bestimmt werden;
einen Zustands-Detektor (76), der einen nächsten Zustand aus dem Codewort niedrigwertiger Bits eines Datensymbols erfasst, das dem Schieberegister zugeführt wird, und ein Zustandauswahl-Signal erzeugt; und
einen Multiplexer (78), der entsprechend dem Zustandsauswahl-Signal Signale von dem ersten oder dem zweiten Demodulator ausgibt.

6. Demodulations-Schaltung nach Anspruch 5, wobei das Codewort höherwertiger Bits eines Datensymbols von dem ersten Demodulator (71) demoduliert wird, der eine Tabelle mit Datensymbolen enthält, die den nächsten Zustand eines zweiten Zustandes angeben, und gleichzeitig von dem zweiten Demodulator (74) demoduliert wird, der eine Tabelle mit Datensymbolen enthält, die den nächsten Zustand eines ersten, dritten und vierten Zustandes angeben.

7. Verfahren zum Erzeugen einer Demodulations-Tabelle zur Verwendung in einer digitalen Videoplatten-Wiedergabevorrichtung, wobei die Demodulations-Tabelle zum Abbilden und Demodulieren eines EFM-Plus-Modulationssignals einen ersten, zweiten, dritten bzw. vierten Zustand hat und das Verfahren die folgenden Schritte umfasst:
Erzeugen einer ersten Umwandlungs-Tabelle mit Datensymbolen, die entweder einen nächsten Zustand des zweiten Zustandes oder einen nächsten Zustand des dritten Zustandes angeben; und
Erzeugen einer zweiten Umwandlungs-Tabelle mit Datensymbolen, die nächste Zustände angeben, die nicht in der ersten Umwandlungs-Tabelle enthalten sind.

8. Demodulations-Verfahren zum Einsatz in einer digitalen Videoplatten-Wiedergabevorrichtung, wobei das Verfahren zum Rekonstruieren von Datensymbolen aus einem mit EFM-Plus-Modulation modulierten Bitstrom dient, der von einer Platte wiedergegeben wird, **dadurch gekennzeichnet, dass** das Demodulationsverfahren umfasst:
Speichern des EFM-Plus-Bitstroms in einem Schieberegister (70);
Umwandeln eines Codeworts höherwertiger Bits eines Datensymbols, das dem Schieberegister zugeführt wird, in 8-Bit-Demodulations-Daten entsprechend einem angegebenen nächsten Zustand, wobei Datensymbole, die einen nächsten Zustand eines zweiten Zustandes angeben, und Datensymbole, die einen nächsten Zustand eines dritten Zustandes angeben, durch verschiedene Tabellen in einem ersten Demodulator (72) bzw. in einem zweiten Demodulator (74) bestimmt werden;
Erfassen (76) eines nächsten Zustandes aus dem Codewort niedrigerwertiger Bits eines Datensymbols, das dem Schieberegister zugeführt wird, und Erzeugen eines Zustandsauswahl-Signals; und
Auswählen (78) von Ausgangssignalen von dem ersten oder dem zweiten Demodulator entsprechend dem Zustandsauswähl-Signal.

9. Verfahren nach Anspruch 8, wobei das Codewort höherwertiger Bits eines Datensymbols von dem ersten Demodulator (72) demoduliert wird, der eine Tabelle mit Datensymbolen enthält, die den nächsten Zustand eines zweiten Zustandes angeben, und gleichzeitig von dem zweiten Demodulator (74) demoduliert wird, der eine Tabelle mit Datensymbolen enthält, die den nächsten Zustand eines ersten, dritten und vierten Zustandes angeben.

## Revendications

1. Table de démodulation destinée à être utilisée dans un appareil de lecture de disque vidéo numérique, ladite table de démodulation servant à mettre en correspondance et à démoduler un signal modulé en format EFM (modulation sur 14 bits d'un signal de 8 bits) plus ayant des premier, deuxième, troisième et quatrième états, respectivement, et étant **caractérisée en ce qu'**elle comprend:
une première table de conversion comportant des symboles de données qui désignent soit un état suivant dudit deuxième état soit un état suivant dudit troisième état; et
une seconde table de conversion comportant des symboles de données qui désignent des états suivants non inclus dans ladite première table de conversion.

2. Table de démodulation selon la revendication 1, dans laquelle:
la première table de conversion comporte des symboles de données qui désignent l'un seulement de (a) l'état suivant du deuxième état et (b) l'état suivant du troisième état; et
la seconde table de conversion comporte des symboles de données qui désignent l'état suivant du premier état et l'état suivant du quatrième état, et l'autre de (a) l'état suivant du troisième état et (b) l'état suivant du second état.

3. Table de démodulation selon la revendication 1, dans laquelle:
la première table de conversion comporte des symboles de données qui désignent un état suivant du deuxième état; et
la seconde table de conversion comporte des symboles de données qui désignent un état suivant des premier, troisième et quatrième états.

4. Table de démodulation selon la revendication 1, dans laquelle:
la première table de conversion comporte des symboles de données qui désignent un état suivant du troisième état; et
la seconde table de conversion comporte des symboles de données qui. désignent un état suivant des premier, deuxième et quatrième états.

5. Circuit de démodulation pour un appareil de lecture de disque vidéo numérique, destiné à reconstituer des symboles de données à partir d'un train de bits en format EFM (modulation sur 14 bits d'un signal de 8 bits) plus reproduit à partir d'un disque, **caractérisé en ce qu'**il comprend:
un registre à décalage (70) destiné à stocker le train de bits modulé en format EFM plus;
des premier (72) et second (74) démodulateurs destinés à convertir un mot de code de bits de poids plus fort d'un symbole de données fourni audit registre à décalage en données de démodulation à huit bits en fonction d'un état suivant désigné, des symboles de données désignant un état suivant d'un deuxième état et des symboles de données désignant un état suivant d'un troisième état étant déterminés par des tables différentes dans les premier et second démodulateurs, respectivement;
un détecteur d'état (76) destiné à détecter un état suivant à partir du mot de code de bits de poids plus faible d'un symbole de donnée fourni audit registre à décalage et à générer un signal de sélection d'état; et
un multiplexeur (78) destiné à fournir en sortie des signaux à partir de l'un desdits premier et second démodulateurs en fonction dudit signal de sélection d'état.

6. Circuit de démodulation tel que défini dans la revendication 5, dans lequel ledit mot de code de bits de poids plus fort d'un symbole de donnée est démodulé à partir dudit premier démodulateur (72) qui comprend une table comportant des symboles de données qui désignent l'état suivant d'un deuxième état, et simultanément à partir dudit second démodulateur (74) qui comprend une table comportant des symboles de données qui désignent les états suivants de premier, troisième et quatrième états.

7. Procédé pour créer une table de démodulation destinée à être utilisée dans un appareil de lecture de disque vidéo numérique, ladite table de démodulation servant à mettre en correspondance et à démoduler un signal modulé en format EFM (modulation sur 14 bits d'un signal de 8 bits) plus ayant des premier, deuxième, troisième et quatrième états, respectivement, ledit procédé comprenant les étapes de:
création d'une première table de conversion comportant des symboles de données qui désignent soit un état suivant dudit deuxième état soit un état suivant dudit troisième état; et
création d'une seconde table de conversion ayant des symboles de données qui désignent des état suivants non inclus dans ladite première table de conversion.

8. Procédé de démodulation destiné à être mis en oeuvre dans un appareil de lecture de disque vidéo numérique, pour reconstituer des symboles de données à partir d'un train de bits modulé en format EFM (modulation sur 14 bits d'un signal de 8 bits) plus reproduits à partir d'un disque, **caractérisé en ce qu'**il comprend les étapes de:
stockage dudit train de bits en format EFM plus dans un registre à décalage (70);
conversion d'un mot de code de bits de poids plus fort d'un symbole de données fourni audit registre à décalage en données de démodulation à huit bits en fonction d'un état suivant désigné, des symboles de données désignant un état suivant d'un deuxième état et des symboles de données désignant un état suivant d'un troisième état étant déterminés par des tables différentes dans un premier démodulateur (72) et dans un second démodulateur (74), respectivement;
détection (76) d'un état suivant à partir du mot de code de bits de poids plus faible d'un symbole de donnée fourni audit registre à décalage et production d'un signal de sélection d'état; et
sélection (78) de signaux de sortie à partir de l'un desdits premier et second démodulateurs en fonction dudit signal de sélection d'état.

9. Procédé tel que défini dans la revendication 8, dans lequel ledit mot de code de bits de poids plus fort d'un symbole de donnée est démodulé à partir dudit premier démodulateur (72) qui comprend une table comportant des symboles de données qui désignent l'état suivant d'un deuxième état, et simultanément à partir dudit second démodulateur (74) qui comprend une table comportant des symboles de données qui désignent l'état suivant de premier, troisième et quatrième états.
